# FASCICULE DE BREVET EUROPEEN

(11) **EP 4 298 759 B1**
(45) Date de publication et mention de la délivrance du brevet: **09.12.2026**
(21) Numéro de dépôt: 22710649.9
(22) Date de dépôt: 17.02.2022
(51) Int. Cl.: H04L 9/08, H04L 9/32

(54) **PROCÉDÉ D'ÉCHANGES SÉCURISÉS ENTRE UN LECTEUR DE CONTRÔLE D'ACCÈS, CONCENTRATEUR IOT ET UNE UNITÉ DE TRAITEMENT DE DONNÉES**
VERFAHREN ZUM SICHEREN AUSTAUSCH ZWISCHEN EINEM ZUGANGSKONTROLLLESER, IOT HUB UND EINER DATENVERARBEITUNGSEINHEIT
METHOD FOR SECURE EXCHANGES BETWEEN AN ACCESS CONTROL READER, IOT HUB AND A DATA PROCESSING UNIT

(30) Priorité: 24.02.2021 FR 2101784
(43) Date de publication de la demande: 03.01.2024
(73) Titulaire: Systemes Et Technologies Identification, 13850 Greasque (FR)
(72) Inventeur: DUPART, Vincent, 83470 SAINT-MAXIMIN-LA-SAINTE-BEAUME (FR); POITRAT, Sylvain, 13850 GREASQUE (FR); MUGNIER, Eric, 13071 LES PENNES-MIRABEAU (FR)
(74) Mandataire: Germain Maureau
(86) Numéro de dépôt international: PCT/FR2022/050285
(87) Numéro de publication internationale: WO 2022/180324

(56) Documents cités:
- JENS BENDER ET AL: "The PACE|AA Protocol for Machine Readable Travel Documents, and its Security", IACR, INTERNATIONAL ASSOCIATION FOR CRYPTOLOGIC RESEARCH, vol. 20130505:080559, 29 April 2013 (2013-04-29), pages 1 - 22, XP061007516
- EUCHNER M: "HMAC-authenticated Diffie-Hellman for MIKEY; draft-ietf-msec-mikey-dhhmac-08.txt", HMAC-AUTHENTICATED DIFFIE-HELLMAN FOR MIKEY; DRAFT-IETF-MSEC-MIKEY-DHHMAC-08.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. msec, no. 8, 1 January 2005 (2005-01-01), XP015023954
- SIMON BLAKE-WILSON ET AL: "Authenticated Diffie-Hellman Key Agreement Protocols", SELECTED AREAS IN CRYPTOGRAPHY, 1 January 1999 (1999-01-01), Berlin, Heidelberg, XP055456171, ISBN: 978-3-540-48892-7, Retrieved from the Internet <URL:https://link.springer.com/content/pdf/10.1007/3-540-48892-8_26.pdf> [retrieved on 20180302], DOI: 10.1007/3-540-48892-8

## Description

La présente invention concerne le domaine de la cryptographie et des protocoles de sécurisation des communications numériques.

Il est connu de sécuriser les communications numériques entre un serveur et un client. En particulier, l'article "The PACE|AA Protocol for Machine Readable Travel Documents, and its Security" par J. Bender et al. divulgue une combinaison des protocoles utilisés par l'Organisation de l'Aviation Civile Internationale (ICAO) pour sécuriser la communication entre un lecteur et un document de voyage.

Les protocoles de sécurisation existants de type serveur / client nécessitent une puissance de calcul importante, qui n'est pas disponible sur un lecteur de contrôle d'accès ou sur concentrateur d'objets connectés, que nous désignerons également par concentrateur IOT (Internet of Things), et sur l'unité de traitement de données correspondantes, lorsque ledit lecteur de contrôle d'accès/concentrateur IOT est destiné à contrôler l'accès à une zone donnée, en lisant les données d'identifications d'un utilisateur sur un badge, de technologie RFID par exemple, et en transmettant les données lues à l'unité de traitement de données pour contrôle par l'unité de traitement de données. L'utilisation de protocoles connus tel que par exemple le protocole TLS pour les systèmes serveur / client pour authentifier l'unité de traitement de données et le lecteur de contrôle d'accès/concentrateur IOT, et pour assurer la sécurité des échanges d'informations entre l'unité de traitement de données et le lecteur de contrôle d'accès/concentrateur IOT avec un niveau de sécurité satisfaisant nécessite une puissance de calcul dont ne disposent pas forcément l'unité de traitement de données et le lecteur de contrôle d'accès d'un dispositif de contrôle d'accès/concentrateur IOT.

De plus, dans un système d'authentification serveur / client, chaque protocole d'échange de clés et d'authentification doit être réalisé pour chacun des clients connectés au serveur car ceux-ci sont de différentes natures et de différents fabricants alors que dans le cas de systèmes de contrôle d'accès/concentrateur IOT, les lecteurs et appareils IOT sont en général de même nature pour un site d'installation donné. Dans ce cas spécifique, il devient donc superflu et long en traitement de gérer pour chacun des lecteurs/IOT un protocole de négociation de clé et d'authentification différent.

Afin de garantir une sécurité tout au long de la vie de l'installation, il est connu de mettre à jour les clés de session une fois l'authentification effectuée pour se prémunir des attaques par brute force. Toutefois, ce type de traitement nécessite l'envoi de nouvelles clés d'authentification avec un protocole complexe qui va encore ajouter de la complexité de traitement dans les lecteurs/IOT.

Il existe un risque d'espionnage des liaisons entre systèmes de contrôle d'accès/concentrateur IOT, les lecteurs et appareils IOT, afin de gérer des attaques de type "l'homme du milieu" permettant à un attaquant de s'insérer dans la liaison existante en se faisant passer pour un faux contrôleur ou un faux lecteur. Ce type d'attaque pourrait être évité par une architecture d'échange en 2 étapes.

Les protocoles d'authentification mentionnés ci-dessus tels que TLS peuvent utiliser l'échange de certificats pour s'échanger leurs clés publiques. La structure des certificats actuels ne permet pas d'inclure le numéro de série du lecteur/lOT car en général les certificats sont globaux pour les différents serveurs dans une architecture serveur/client.

Enfin les lecteurs de contrôle d'accès / IOT et leurs contrôleurs vont évoluer dans le temps pour devenir de plus en plus puissant ce qui permettrait à terme d'utiliser les protocoles d'authentification existant de type TLS et ensuite inclure le procédé d'échanges sécurisés entre un lecteur et un contrôleur configurés pour communiquer entre eux dans les paquets de données des trames de type IP. Dans ce dernier cas, il serait très complexe de refaire la couche d'échange entre les contrôleurs et lecteurs de contrôle d'accès /IOT et il faut donc pouvoir optimiser cette intégration.

L'invention a donc pour but de proposer une solution à tout ou partie de ces problèmes.

A cet effet, la présente invention concerne un procédé d'échanges sécurisés entre un lecteur et un contrôleur configurés pour communiquer entre eux via un canal de communication, le procédé comprenant les phases suivantes mises en œuvre par le lecteur:
- une phase de lecture d'au moins une information par le lecteur;
- une phase d'échange d'une clé publique du lecteur et d'une clé publique du contrôleur;
- une phase de génération d'une suite de clés de session;
- une phase de confirmation de la suite de clés basée sur l'utilisation d'une première clé de session de la suite de clés de session,
- une phase protocolaire de communication sécurisée entre le lecteur et le contrôleur.

Selon un mode de mise en œuvre, l'invention comprend une ou plusieurs des caractéristiques suivantes, seules ou en combinaison techniquement acceptable.

Selon un mode de mise œuvre, le lecteur et le contrôleur sont configurés pour assurer un contrôle d'accès à une zone protégée.

Selon un mode de mise en œuvre, le lecteur est un lecteur de contrôle d'accès, par exemple un lecteur de badge RFID, ou un concentrateur IOT, configuré pour lire l'information numérique contenue dans le badge.

Dans la suite du texte, le lecteur de contrôle d'accès désignera aussi bien le lecteur de badge pour le contrôle d'accès à une zone donnée que le concentrateur IOT.

Selon un mode de mise en œuvre, la phase d'échange d'une clé publique du contrôleur comprend l'échange d'une pluralité de clés publiques du contrôleur.

Selon un mode de mise en œuvre, la phase d'échange de clés comprend :
- une étape de réception de la clé publique du contrôleur, et de réception d'une liste de mécanismes de sécurité proposés par le contrôleur, et de réception d'un paramètre de sécurité généré par le contrôleur ;
- une étape d'émission vers le contrôleur, de la clé publique du lecteur, et d'un numéro de série du lecteur, et d'un mécanisme de sécurité accepté par le lecteur, ledit mécanisme de sécurité étant choisi par le parmi la liste de mécanismes de sécurité, et d'un paramètre de sécurité généré par le lecteur.

Selon un mode de mise en œuvre, le numéro de série du lecteur est transformé ou chiffré.

Selon un mode de mise en œuvre, la phase d'échange de clés est réalisée au cours d'une phase de configuration du lecteur avant une phase d'installation sur site du lecteur, via un autre canal de communication entre le lecteur et le contrôleur, ledit autre canal de communication étant différent du canal de communication.

Selon un mode de mise en œuvre, l'autre moyen de communication est un réseau étendu, de type internet, ou une liaison radio.

Selon ces dispositions un espionnage des échanges pendant la phase d'échange de clés est évité.

Selon un mode de mise en œuvre, les informations reçues, respectivement émises, au cours de la phase d'échange de clés sont encapsulées dans une trame IP
Selon un mode de mise en œuvre, la clé publique du contrôleur est reçue dans un certificat du contrôleur.

Selon un mode de mise en œuvre, la clé publique du lecteur est émise dans un certificat du lecteur.

Selon un mode de mise en œuvre, le certificat du lecteur contient le numéro de série du lecteur.

Selon un mode de mise en œuvre, la clé publique du contrôleur est reçue dans un certificat du contrôleur, et la clé publique du lecteur est émise dans un certificat du lecteur.

Selon un mode de mise en œuvre, le numéro de série du lecteur est chiffré ou transformé.

Selon ces dispositions, le choix du mécanisme de sécurité parmi la liste de mécanismes de sécurité permet d'ajuster le besoin en puissance de calcul aux ressources disponibles sur le lecteur et sur le contrôleur.

Selon un mode de mise en œuvre, le contrôleur est configuré pour communiquer avec plusieurs lecteurs comprenant un lecteur maître et d'autres lecteurs, le mécanisme de sécurité étant accepté par le lecteur maître au cours d'une phase d'échange de clés entre le contrôleur et le lecteur maître, le mécanisme de sécurité accepté par le lecteur maître étant ensuite le seul proposé aux autres lecteurs au cours d'une autre phase d'échange de clés avec chacun des autres lecteurs.

Selon ces dispositions, la sécurité entre tous les lecteurs est homogénéisée.

Selon un mode de mise en œuvre, l'étape de réception de la clé publique du contrôleur comprend la réception d'une pluralité de clés publiques du contrôleur.

Selon un mode de mise en œuvre, le paramètre de sécurité généré par le contrôleur est généré aléatoirement, par exemple selon un procédé cryptographique.

Selon un mode de mise en œuvre, le paramètre de sécurité généré par le lecteur est généré aléatoirement, par exemple selon un procédé cryptographique.

Selon un mode de mise en œuvre, la phase de génération d'une suite de clés de session comprend les étapes suivantes :
- un étape de calcul d'un secret, partagé par le lecteur et par le contrôleur, le secret étant calculé à partir d'une clé privée du lecteur et de la clé publique du contrôleur;
- une étape de calcul de la suite de clés de session à partir du secret partagé, et du numéro de série du lecteur, et du paramètre de sécurité généré par le lecteur, et du paramètre de sécurité généré par le contrôleur;

Selon un mode de mise en œuvre, le calcul du secret partagé utilise l'échange de clés de type Diffie-Hellman basé sur des courbes elliptiques.

Selon un mode de mise en œuvre, le calcul du secret partagé utilise l'échange de clés Diffie-Hellman basé sur des algorithmes à clé publique.

Selon un mode de mise en œuvre, l'étape de calcul de la suite de clés de session à partir du secret partagé peut être déclenchée par une réalisation d'une condition de déclenchement parmi les conditions de déclenchement suivantes :
- un temps d'inactivité du contrôleur supérieur à un seuil prédéterminé ;
- un nombre d'évènements supérieur à un seuil prédéterminé, le nombre d'évènement étant compté par un compteur commun au lecteur et au contrôleur ;
- une commande du contrôleur.

Selon ces dispositions, il est possible de générer de nouvelles clés de session sans avoir besoin de relancer la phase d'échange de clés entre le contrôleur et le lecteur avec un nouveau calcul de secret partagé. Un temps d'inactivité du contrôleur supérieur à un seuil prédéterminé peut signifier que le lecteur a changé ses clés de session.

Selon un mode de mise en œuvre, la phase de confirmation de la suite de clés comprend :
- une étape de réception d'un premier code d'authentification calculé par le contrôleur en fonction de la première clé de session de la suite de clés de session, et en fonction d'un identifiant du contrôleur, et d'un identifiant du lecteur, et du paramètre de sécurité généré par le lecteur, et du paramètre de sécurité généré par le contrôleur;
- une étape d'émission d'un deuxième code d'authentification calculé par le lecteur en fonction de la première clé de session de la suite de clés de session, et en fonction de l'identifiant du contrôleur, et de l'identifiant du lecteur, et du paramètre de sécurité généré par le lecteur, et du paramètre de sécurité généré par le contrôleur;
- une étape de vérification du premier code d'authentification reçu ;

Selon un mode de mise en œuvre, le premier code d'authentification est calculé en fonction d'une première valeur alphanumérique prédéterminée.

Selon un mode de mise en œuvre, le deuxième code d'authentification est calculé en fonction d'une deuxième valeur alphanumérique prédéterminée.

Selon un mode de mise en œuvre, le paramètre de sécurité généré par le lecteur est une autre clé publique générée par le lecteur, à laquelle correspond une autre clé privée générée par le lecteur, et dans lequel le secret est concaténé avec un autre secret partagé calculé à partir de l'autre clé privée générée par le lecteur et de la clé publique du contrôleur, et le secret partagé concaténé devenant le secret partagé utilisé pour l'étape de calcul de la suite de clés de session.

Selon un mode de mise en œuvre, le paramètre de sécurité généré par le contrôleur est une autre clé publique générée par le contrôleur, à laquelle correspond une autre clé privée générée par le contrôleur, et dans lequel l'autre secret partagé est calculé à partir de l'autre clé privée générée par lecteur et de la clé publique du contrôleur.

Selon un mode de mise en œuvre, la phase protocolaire comprend une étape de réception par le lecteur d'une requête sécurisée en provenance du contrôleur, une étape de calcul d'une signature à partir de l'information lue et d'une clé de la suite de clé de sessions et une étape de création d'une trame comprenant la signature concaténée avec les informations lues et avec un compteur anti-rejeu, et une étape de chiffrement de la trame en utilisant une autre clé de la suite de clés de session, et une étape de transmission de la trame chiffrée.

Selon ces dispositions, après les premières phases d'authentification, la communication entre le lecteur et le lecteur est sécurisée.

L'invention concerne également un procédé de communication sécurisé entre un lecteur et un contrôleur, le procédé comprenant les phases suivantes mises en œuvre par le contrôleur :
- une phase d'échange d'une clé publique du lecteur et d'une clé publique du contrôleur;
- une phase de génération d'une suite de clés de session ;
- une phase de confirmation de la suite de clés basée sur l'utilisation d'une première clé de session de la suite de clés de session.
- une phase protocolaire de communication sécurisée entre le lecteur et le contrôleur.

Selon un mode de mise en œuvre, le contrôleur est configuré pour contrôler l'identité, et l'accès à une zone donnée, d'un utilisateur du badge à partir de l'information lue par le lecteur sur le badge et reçue par le contrôleur, le procédé comprenant une phase finale de contrôle d'une identité d'un utilisateur du badge.

Selon un mode de mise en œuvre, la phase d'échange d'une clé publique du lecteur et d'une clé publique du contrôleur, comprend :
- une étape d'émission vers le lecteur, de la clé publique du contrôleur et d'une liste de mécanismes de sécurité proposés par le contrôleur, et d'un paramètre de sécurité généré par le contrôleur;
- une étape de réception de la clé publique du lecteur, et d'un numéro de série du lecteur, et d'un mécanisme de sécurité accepté par le lecteur, ledit mécanisme de sécurité étant choisi par le parmi la liste, et d'un paramètre de sécurité généré par le lecteur.

Selon un mode de mise en œuvre, le numéro de série du lecteur est transformé ou chiffré.

Selon un mode de mise en œuvre, la phase d'échange des clés est réalisée avant une phase d'installation sur site du lecteur, via un autre moyen de communication entre le lecteur et le contrôleur, l'autre moyen de communication étant différent du moyen de communication utilisé sur site.

Selon un mode de mise en œuvre, l'autre moyen de communication est un réseau étendu, de type internet, ou une liaison radio.

Selon ces dispositions un espionnage des échanges pendant la phase d'échange de clés est évité.

Selon un mode de mise en œuvre, les informations reçues, respectivement émises au cours de la phase d'échange de clés sont encapsulées dans une trame IP

Selon un mode de mise en œuvre, la clé publique du contrôleur est reçue avec un certificat du contrôleur.

Selon un mode de mise en œuvre, la clé publique du lecteur est émise avec un certificat du lecteur.

Selon un mode de mise en œuvre, le certificat du lecteur contient le numéro de série du lecteur.

Selon un mode de mise en œuvre le numéro de série du lecteur est chiffré ou transformé.

Selon un mode de mise en œuvre, le contrôleur est configuré pour communiquer avec plusieurs lecteurs comprenant un lecteur maître et d'autres lecteurs, le mécanisme de sécurité étant accepté par le lecteur maître au cours d'une phase d'échange de clés entre le contrôleur et le lecteur maître, le mécanisme de sécurité accepté par le lecteur maître étant ensuite le seul proposé aux autres lecteurs au cours d'une autre phase d'échange de clés avec chacun des autres lecteurs.

Selon ces dispositions, la sécurité entre tous les lecteurs est homogénéisée.

Selon un mode de mise en œuvre, l'étape d'émission de la clé publique du contrôleur comprend l'émission d'une pluralité de clés publiques du contrôleur.

Selon un mode de mise en œuvre, la phase de génération d'une suite de clés de session comprend les étapes suivantes :
- un étape de calcul d'un secret, partagé par le lecteur et par le contrôleur, le secret étant calculé à partir d'une clé privée du contrôleur et de la clé publique du lecteur;
- une étape de calcul de la suite de clés de session à partir du secret partagé, et du numéro de série du lecteur, et du paramètre de sécurité généré par le lecteur, et du paramètre de sécurité généré par le contrôleur;

Selon un mode de mise en œuvre, le calcul du secret partagé utilise l'échange de clés Diffie-Hellman basé sur des courbes elliptiques.

Selon un mode de mise en œuvre, le calcul du secret partagé utilise l'échange de clés Diffie-Hellman basé sur des algorithmes à clé publique.

Selon un mode de mise en œuvre, l'étape de calcul de la suite de clés de session à partir du secret partagé peut être déclenchée par une réalisation d'une condition de déclenchement parmi les conditions de déclenchement suivante :
- un temps d'inactivité du contrôleur supérieur à un seuil prédéterminé ;
- un nombre d'évènements supérieur à un seuil prédéterminé, le nombre d'évènement étant compté par un compteur commun au lecteur et au contrôleur ;
- une commande du contrôleur.

Selon ces dispositions, il est possible de générer de nouvelles clés de session sans avoir besoin de relancer la phase d'échange de clés entre le contrôleur et le lecteur avec un nouveau calcul de secret partagé. Un temps d'inactivité du contrôleur supérieur à un seuil prédéterminé peut signifier que le lecteur a changé ses clés de session.

Selon un mode de mise en œuvre, la phase de confirmation de la suite de clés comprend :
- une étape d'émission d'un premier code d'authentification calculé par le contrôleur en fonction de la première clé de session de la suite de clés de session, et en fonction d'un identifiant du contrôleur, et d'un identifiant du lecteur, et du paramètre de sécurité généré par le lecteur, et du paramètre de sécurité généré par le contrôleur ;
- une étape de réception d'un deuxième code d'authentification calculé par le lecteur en fonction de la première clé de session de la suite de clés de session, et en fonction d'un identifiant du contrôleur, et d'un identifiant du lecteur, et du paramètre de sécurité généré par le lecteur, et du paramètre de sécurité généré par le contrôleur;
- une étape de vérification du deuxième code d'authentification reçu.

Selon un mode de mise en œuvre, le premier code d'authentification est calculé en fonction d'une première valeur alphanumérique prédéterminée.

Selon un mode de mise en œuvre, le deuxième code d'authentification est calculé en fonction d'une deuxième valeur alphanumérique prédéterminée.

Selon un mode de mise en œuvre, le paramètre de sécurité généré par le lecteur est une autre clé publique générée par le lecteur, et dans lequel le secret partagé est concaténé avec un autre secret partagé calculé à partir de la clé privée du contrôleur et de l'autre clé publique générée par le lecteur, le secret partagé concaténé devenant le secret partagé utilisé pour l'étape de calcul de la suite de clés de session.

Selon un mode de mise en œuvre, le paramètre de sécurité généré par le contrôleur est une autre clé publique générée par le contrôleur, à laquelle correspond une autre clé privée générée par le contrôleur, et dans lequel l'autre secret partagé est calculé à partir de l'autre clé privée générée par contrôleur et de l'autre clé publique générée par le lecteur.

Selon un mode de mise en œuvre, la phase protocolaire comprend une étape d'émission par le contrôleur vers le lecteur d'une requête sécurisée, une étape de réception d'une trame chiffrée, une étape de déchiffrement de la trame en utilisant une clé de la suite de clés de session, la trame déchiffrée comprenant une signature concaténée avec l'information lue et avec un compteur anti-rejeu, et une étape de vérification de la signature avec une autre clé de la suite de clés de session et du compteur anti-rejeu.

Selon un mode de mise en œuvre, le contrôleur est configuré pour communiquer avec une pluralité de lecteurs, un lecteur parmi la pluralité de lecteurs étant un lecteur maître, le mécanisme de sécurité étant accepté par le lecteur maître au cours d'une phase d'échange de clés entre le contrôleur et le lecteur maître, le mécanisme de sécurité accepté par le lecteur maître étant ensuite le seul proposé aux autres lecteurs de la pluralité de lecteurs, au cours d'une autre phase d'échange de clés entre le contrôleur avec chacun des autres lecteurs de la pluralité de lecteurs.

Selon un mode de mise en œuvre, la pluralité de lecteurs comprend un premier groupe de lecteurs configuré pour protéger l'accès à une première zone, et dans lequel la pluralité de lecteurs comprend au moins un deuxième groupe de lecteurs configuré pour protéger l'accès à au moins une deuxième zone, et dans lequel le lecteur maître appartient au premier groupe de lecteurs , le mécanisme de sécurité étant accepté par le lecteur maître au cours d'une phase d'échange de clés entre le contrôleur et le lecteur maître, le mécanisme de sécurité accepté par le lecteur maître étant ensuite le seul proposé aux autres lecteurs du premier groupe de lecteurs au cours d'une autre phase d'échange de clés entre le contrôleur avec chacun des autres lecteurs du premier groupe de lecteurs.

Selon un aspect de l'invention, l'invention concerne également un lecteur de contrôle d'accès pour le contrôle d'accès à une zone, configuré pour communiquer une information, lue sur un badge, à un contrôleur, selon l'un des exemples de mise en œuvre du procédé décrit ci-avant.

Selon un autre aspect de l'invention, l'invention concerne également un contrôleur d'un lecteur de contrôle d'accès configuré pour communiquer avec le lecteur de contrôle d'accès selon l'un des exemples de mise en œuvre du procédé 200 décrit ci-avant.

Pour sa bonne compréhension, un mode de réalisation et/ou de mise en oeuvre de l'invention est décrit en référence aux dessins ci-annexés représentant, à titre d'exemple non limitatif, une forme de réalisation ou de mise en œuvre respectivement d'un dispositif et/ou d'un procédé selon l'invention. Les mêmes références sur les dessins désignent des éléments similaires ou des éléments dont les fonctions sont similaires.

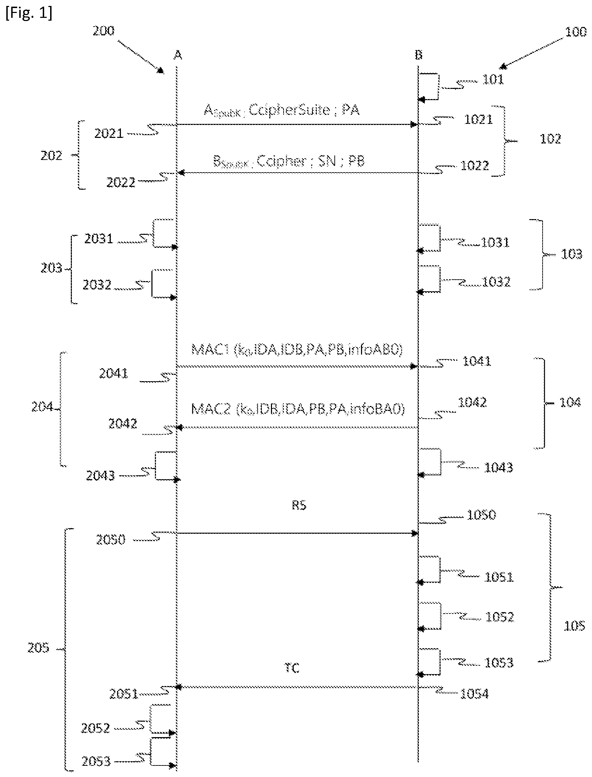

[Fig. 1] est une représentation schématique des étapes du procédé selon l'invention, du point de vue du contrôleur d'une part, et du point de vue d'un lecteur de contrôle d'accès d'autre part.
[Fig. 2] est une représentation schématique d'une installation comprenant un contrôleur et plusieurs lecteurs.
[Fig. 3] est une représentation schématique d'une autre installation comprenant un contrôleur et plusieurs lecteurs, avec un lecteur maître pour l'ensemble de l'installation.
[Fig. 4] est une représentation schématique d'une autre installation comprenant un contrôleur et plusieurs lecteurs, organisés en deux groupes distincts de lecteurs, et un lecteur maître pour un seul groupe de lecteur.

Le protocole ou procédé 100, 200 d'échanges sécurisés selon l'invention est destiné à un dispositif de contrôle d'accès à une zone protégée ou à un concentrateur IOT. Le dispositif de contrôle d'accès comprend typiquement un lecteur B de badge et une unité de traitement logique (UTL), appelée également contrôleur A. Le lecteur de contrôle d'accès B met par exemple en œuvre la technologie de type RFId configurée pour la lecture des informations contenues dans un badge de type RFId; le lecteur de contrôle d'accès B est configuré pour mettre en œuvre un micro-logiciel embarqué, et communiquer avec le contrôleur A, par exemple via une liaison série de type RS485, selon un procédé 100, 200 de communication sécurisé selon l'invention. Le procédé 100, 200 de communication sécurisée selon l'invention comprend une partie du procédé 100 de communication sécurisé mis en œuvre plus particulièrement par le lecteur de contrôle d'accès B et une autre partie du procédé 200 de communication sécurisé mis en œuvre plus particulièrement par le contrôleur A. Ce procédé permet d'effectuer dans un premier temps une authentification entre le contrôleur A et le lecteur B, et dans un deuxième temps d'assurer la sécurité des communications entre le lecteur B et le contrôleur A.

Pour s'adapter à la puissance de calcul limitée du lecteur B et du contrôleur A du dispositif de contrôle d'accès, le procédé 100 de communication sécurisée mis en œuvre plus particulièrement par le lecteur de contrôle d'accès B comprend les phases suivantes :
- une phase 101 de lecture d'une information par le lecteur B;
- une phase 102 d'échange d'une clé publique B_{SpubK} du lecteur B, et d'une ou plusieurs clé(s) publique(s) A_{SpubK} du contrôleur A ;
- une phase 103 de génération d'une suite de clés de session;
- une phase 104 de confirmation de la suite de clés basée sur l'utilisation d'une première clé de session k₀ de la suite de clés de session,
- une phase 105 protocolaire de communication sécurisée entre le lecteur B et le contrôleur A.

Symétriquement, et en correspondance avec les phases du procédé 100 mises en œuvre par le lecteur B, le procédé 200 de communication sécurisée mis en œuvre plus particulièrement par le contrôleur A, comprend les phases suivantes :
- une phase 202 d'échange d'une clé publique BSpubK du lecteur B et d'une clé publique A_{SpubK} du contrôleur A ;
- une phase 203 de génération d'une suite de clés de session ;
- une phase 204 de confirmation de la suite de clés basée sur l'utilisation d'une première clé de session k0 de la suite de clés de session.
- une phase 205 protocolaire de communication sécurisée entre le lecteur B et le contrôleur A.

Selon ces dispositions, après les premières phases 102, 202, 103, 203, 104, 204, du procédé 100, 200, qui sont des phases d'authentification et de confirmation des clés de la suite de clés, la communication entre le lecteur B et le lecteur A pendant la phase protocolaire 105, 205 est sécurisée. La première clé de session k0 de la suite de clés de session est une première clé de session choisie parmi les clés de la suite de clés de sessions, mais n'est pas nécessairement la première de la suite de clés.

Selon un exemple, la phase protocolaire 105 du procédé 100 mis en œuvre par le lecteur B, comprend une étape 1050 de réception par le lecteur B d'une requête sécurisée RS en provenance du contrôleur A, une étape de calcul d'une signature 1051 à partir de l'information lue et d'une clé de la suite de clé de sessions et une étape 105 de création d'une trame comprenant la signature concaténée avec les informations lues et avec un compteur anti-rejeu, et une étape 1053 de chiffrement de la trame en utilisant une autre clé de la suite de clés de session, et une étape 1054 de transmission de la trame chiffrée TC.

De manière correspondante, la phase protocolaire 205 du procédé 200 mis en œuvre par le contrôleur A, comprend une étape 2050 d'émission par le contrôleur A vers le lecteur B d'une requête sécurisée RS, une étape 2051 de réception d'une trame chiffrée TC, une étape 2052 de déchiffrement de la trame en utilisant une clé de la suite de clés de session, la trame déchiffrée comprenant une signature concaténée avec l'information lue et avec un compteur anti-rejeu, et une étape 2053 de vérification de la signature avec une autre clé de la suite de clés de session et du compteur anti-rejeu.

En particulier, pour s'adapter à la puissance de calcul limitée du lecteur B et du contrôleur A du dispositif de contrôle d'accès, la phase 102 d'échange de clés des phases d'authentification du procédé 100 mis en œuvre par le lecteur B comprend :
- une étape 1021 de réception de la ou des clé(s) publique(s) A_{SpubK} du contrôleur A, et de réception d'une liste de mécanismes de sécurité CcipherSuite proposés par le contrôleur A, et de réception d'un paramètre de sécurité PA généré par le contrôleur A;
- une étape 1022 d'émission vers le contrôleur A, de la clé publique B_{SpubK} du lecteur B, et d'un numéro de série SN du lecteur B, ou une représentation d'un numéro de série SN transformé du lecteur B, ou chiffré par une des clé(s) publique(s) A_{SpubK} du contrôleur A, et d'un mécanisme Ccipher de sécurité accepté par le lecteur B, ledit mécanisme de sécurité Ccipher étant choisi par le parmi la liste de mécanismes de sécurité CcipherSuite, et d'un paramètre de sécurité PB généré par le lecteur B. La transformation du numéro de série peut consister par exemple en une translation, ou une inversion, ou un mélange avec un autre numéro. Le chiffrement du numéro de série peut par exemple être réalisé avec la clé publique du contrôleur reçue dans l'étape précédente.

Selon ces dispositions, le choix du mécanisme de sécurité parmi la liste de mécanismes de sécurité permet d'ajuster le besoin en puissance de calcul aux ressources disponibles sur le lecteur et sur le contrôleur.

Plus particulièrement, l'étape de réception de la clé publique du contrôleur comprend la réception d'une pluralité de clés publiques du contrôleur.

Par exemple, le paramètre de sécurité généré par le contrôleur et/ou le lecteur est généré aléatoirement, selon un procédé cryptographique.

Symétriquement, et en correspondance avec les étapes de la phase 102 d'échange de clés du procédé 100 mis en œuvre par le lecteur B, la phase 202 d'échange d'une clé publique B_{SpubK} du lecteur B et d'une clé publique A_{SpubK} du contrôleur A, comprend :
- une étape 2021 d'émission vers le lecteur B, de la ou des clé(s) publique(s) A_{SpubK} du contrôleur A, et d'une liste de mécanismes de sécurité CcipherSuite proposés par le contrôleur A, et d'un paramètre de sécurité PA généré par le contrôleur A;
- une étape 2022 de réception de la clé publique B_{SpubK} du lecteur B, et d'un numéro de série SN du lecteur B, et d'un mécanisme Ccipher de sécurité accepté par le lecteur B, ledit mécanisme de sécurité Ccipher étant choisi par le parmi la liste CcipherSuite, et d'un paramètre de sécurité PB généré par le lecteur B.

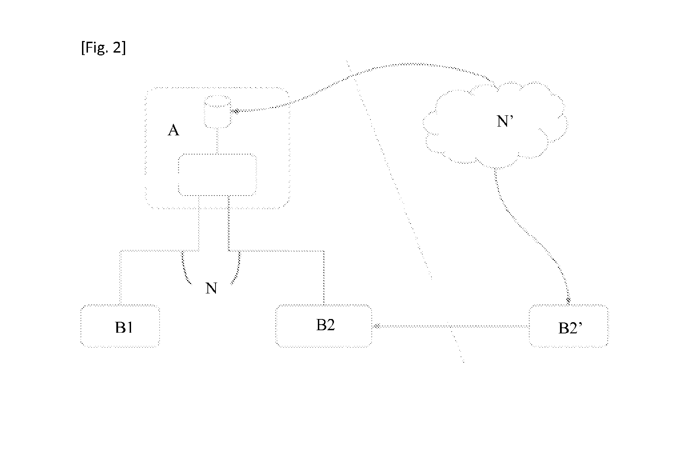

En particulier, en considérant l'installation, illustrée sur la figure 2, qui comprend un contrôleur A et plusieurs lecteurs B1, B2, la phase d'échange des clés peut être réalisée au cours d'une phase de configuration du lecteur B2, avant une phase d'installation sur site du lecteur B2 configuré, via un autre canal de communication N' ; ledit autre canal de communication N' permettant au lecteur B2 en phase de configuration, désigné sur la figure 2 par la référence B2' pour le distinguer du lecteur B2 configuré et installé sur le site d'opération, de communiquer avec .

Plus particulièrement, l'autre moyen de communication N' est un réseau étendu, de type internet, ou une liaison radio.

Ainsi, un espionnage est évité sur le canal de communication N, utilisé sur le site d'opération pour les échanges pendant la phase d'échange de clés sur le site d'opération, puisque cet échange de clés a déjà été réalisé via l'autre canal de communication N.

Selon un exemple de mise en œuvre, les informations reçues, respectivement émises au cours de la phase d'échange de clés sont encapsulées dans une trame IP
En particulier, la clé publique du contrôleur est reçue avec un certificat du contrôleur, et la clé publique du lecteur est émise dans un certificat du lecteur.

Plus particulièrement, le certificat du lecteur contient le numéro de série du lecteur, en clair, chiffré ou transformé.

En particulier encore, la phase 103 de génération d'une suite de clés de session du procédé 100 mis en œuvre par le lecteur B comprend :
- une étape 1031 de calcul d'un secret S, partagé par le lecteur B et par le contrôleur A, le secret S étant calculé à partir d'une clé privée B_{SprivK} du lecteur B et de la clé publique A_{SpubK} du contrôleur A ; par exemple, pour un algorithme à base de courbe elliptique, le secret partagé S = S_{S} |S_{E}, où : ${S}_{S} = ECDH \left({A}_{SprivK}, {B}_{SpubK}\right)$
   - S_{E} =ECDH(A_{EprivK}, B_{EpubK}), où B_{EpubK} est une autre clé publique générée par le lecteur B, à laquelle correspond une autre clé privée B_{EprivK} générée par le lecteur B, et où A_{EprivK} une autre clé privée générée par le contrôleur A, à laquelle correspond une autre clé publique A_{EpubK} générée par le contrôleur A ;
- une étape 1032 de calcul de la suite de clés de session Ki à partir du secret partagé S, et du numéro de série SN du lecteur B, et du paramètre de sécurité PB généré par le lecteur B, et du paramètre de sécurité PA généré par le contrôleur A.

Par exemple : $Ki = KDFi \left(SNR, S, PA, PB\right) avec i = \left[0:3\right] ;$ où KDFi désigne un algorithme permettant de calculer plusieurs clés de session Ki ; par exemple KDF est un des algorithmes connus de l'homme du métier, tels que par exemple les algorithmes définis dans Wikipedia/ Key derivation function ; l'algorithme KDF est par exemple exécuté 4 fois afin d'obtenir 4 clés de session Ki , i=1 à 3.

Selon un mode de mise en œuvre, cette étape 1032 de calcul de la suite de clés de session à partir du secret partagé S peut être relancée soit sur :
- un événement temporel : Basé sur un temps d'inactivité du contrôleur A. Si le contrôleur A n'a pas échangé avec le lecteur pendant une période de temps alors le contrôleur A suppose que le lecteur a changé ses clés de session ;
- un compteur : déclenchement de changement sur un compteur commun entre le contrôleur et les lecteurs ;
- une commande du contrôleur : demande du contrôleur A de renouveler les clés de session sur son initiative. Il serait possible également dans ce cas de demander de relancer une négociation de protocole ;

Ce principe permet donc de générer à nouveau des clés de sessions différentes des clés précédentes sans avoir besoin de relancer le protocole d'échange de clés et/ou d'échanges entre le contrôleur et le lecteur permettant un nouveau calcul de clés de session.

Symétriquement, et en correspondance avec les étapes de la phase 103 de génération d'une suite de clés de session du procédé 100 mis en œuvre par le lecteur B, la phase 203 de génération d'une suite de clés de session du procédé 200 mis en œuvre par le contrôleur A, comprend les étapes suivantes :
- un étape 2031 de calcul d'un secret S, partagé par le lecteur B et par le contrôleur A, le secret S étant calculé à partir d'une clé privée A_{SprivK} du contrôleur A et de la clé publique B_{SpubK} du lecteur B ;
- une étape 2032 de calcul de la suite de clés de session à partir du secret partagé S, et du numéro de série SN du lecteur B, et du paramètre de sécurité PB généré par le lecteur B, et du paramètre de sécurité PA généré par le contrôleur A.

Symétriquement, et en correspondance avec les étapes de la phase 103 de génération d'une suite de clés de session du procédé 100 mis en œuvre par le lecteur B, le calcul de la suite de clés de session à partir du secret partagé S peut être relancée par le contrôleur soit avec l'utilisation d'un compteur temporel, compteur d'unité ou sur son initiative en envoyant une commande renouvellement de clés de sessions
Plus particulièrement, le calcul du secret partagé utilise l'échange de clés Diffie-Hellman basé sur des courbes elliptiques.

Plus particulièrement, le calcul du secret partagé utilise l'échange de clés Diffie-Hellman basé sur des algorithmes à clé publique.

En particulier, la phase 104 de confirmation de la suite de clés du procédé 100 mis en œuvre par le lecteur B comprend :
- une étape 1041 de réception d'un premier code d'authentification MAC1 calculé par le contrôleur A en fonction de la première clé de session k₀ de la suite de clés de session, et en fonction d'un identifiant IDA du contrôleur A, et d'un identifiant IDB du lecteur B, et du paramètre de sécurité PB généré par le lecteur B, et du paramètre de sécurité PA généré par le contrôleur A;
- une étape 1042 d'émission d'un deuxième code d'authentification MAC2 calculé par le lecteur B en fonction de la première clé de session k₀ de la suite de clés de session, et en fonction de l'identifiant IDA du contrôleur A, et de l'identifiant IDB du lecteur B, et du paramètre de sécurité PB généré par le lecteur B, et du paramètre de sécurité PA généré par le contrôleur A.
- une étape 1043 de vérification du premier code d'authentification MAC1 reçu.
Symétriquement, et en correspondance avec les étapes de la phase 104 de confirmation de la suite de clés du procédé 100 mis en œuvre par le lecteur B, la phase 204 de confirmation de la suite de clés du procédé 200 mis en œuvre par le contrôleur A, comprend les étapes suivantes :
- une étape 2041 d'émission d'un premier code d'authentification MAC1 calculé par le contrôleur A en fonction de la première clé de session k₀ de la suite de clés de session, et en fonction d'un identifiant IDA du contrôleur A, et d'un identifiant IDB du lecteur B, et du paramètre de sécurité PB généré par le lecteur B, et du paramètre de sécurité PA généré par le contrôleur A;
- une étape 2042 de réception d'un deuxième code d'authentification MAC2 calculé par le lecteur B en fonction de la première clé de session k₀ de la suite de clés de session, et en fonction d'un identifiant IDA du contrôleur A, et d'un identifiant IDB du lecteur B, et du paramètre de sécurité PB généré par le lecteur B, et du paramètre de sécurité PA généré par le contrôleur A;
- une étape 2043 de vérification du deuxième code d'authentification MAC2 reçu.

Selon un exemple particulier, le premier code d'authentification est calculé en fonction d'une première valeur alphanumérique prédéterminée infoAB0, et le deuxième code d'authentification est calculé en fonction d'une deuxième valeur alphanumérique prédéterminée infoBA0.

Plus particulièrement, le paramètre de sécurité PB généré par le lecteur B est une autre clé publique B_{EpubK} générée par le lecteur B, à laquelle correspond une autre clé privée B_{EprivK} générée par le lecteur B, et dans lequel le secret S est concaténé avec un autre secret partagé S_{E} calculé à partir de l'autre clé privée B_{EprivK} générée par le lecteur B et de la clé publique A_{SpubK} du contrôleur A, et le secret partagé concaténé devenant le secret partagé S utilisé pour l'étape 1032 de calcul de la suite de clés de session. Symétriquement, de manière correspondante, le paramètre de sécurité PB généré par le lecteur B est une autre clé publique B_{EpubK} générée par le lecteur B, et dans lequel le secret partagé S est concaténé avec un autre secret partagé S_{E} calculé à partir de la clé privée A_{SprivK} du contrôleur A et de l'autre clé publique B_{EpubK} générée par le lecteur B, le secret partagé concaténé devenant le secret partagé S utilisé pour l'étape 2032 de calcul de la suite de clés de session.

Plus particulièrement encore, le paramètre de sécurité PA généré par le contrôleur A est une autre clé publique A_{EpubK} générée par le contrôleur A, à laquelle correspond une autre clé privée A_{EprivK} générée par le contrôleur A, et dans lequel l'autre secret partagé S_{E} est calculé à partir de l'autre clé privée B_{EprivK} générée par lecteur B et de la clé publique A_{EpubK} du contrôleur A. Symétriquement, de manière correspondante, le paramètre de sécurité PA généré par le contrôleur A est une autre clé publique A_{EpubK} générée par le contrôleur A, à laquelle correspond une autre clé privée A_{EprivK} générée par le contrôleur A, et dans lequel l'autre secret partagé S_{E} est calculé à partir de l'autre clé privée A_{EprivK} générée par contrôleur A et de l'autre clé publique B_{EpubK} générée par le lecteur B.

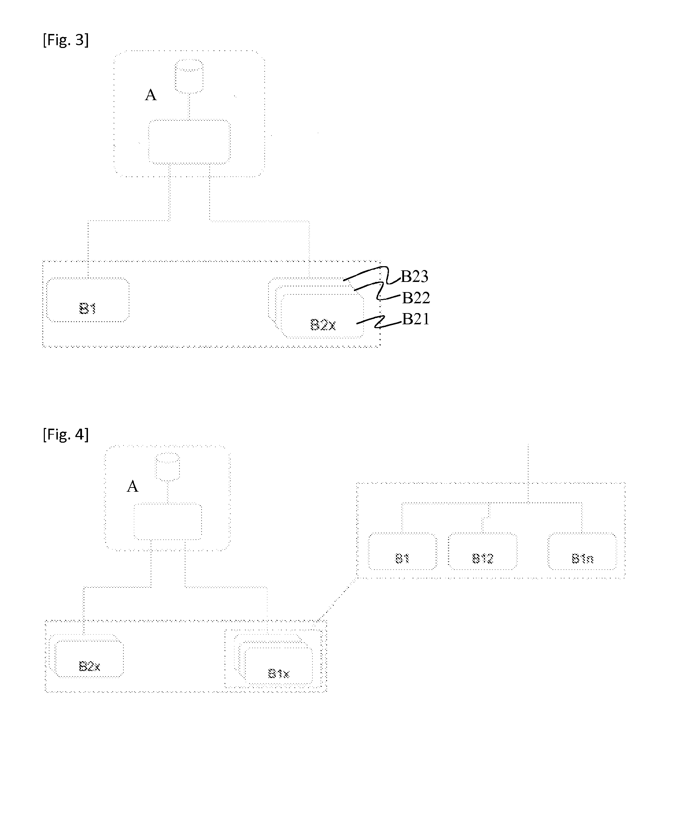

Selon un exemple de mise en œuvre illustré sur la figure 3, le contrôleur A est configuré pour communiquer avec une pluralité de lecteurs B1, B21, B22, B23, un lecteur B1 parmi la pluralité de lecteurs étant un lecteur maître B1, le mécanisme de sécurité étant accepté par le lecteur maître B1 au cours d'une phase d'échange de clés entre le contrôleur A et le lecteur maître B1, le mécanisme de sécurité accepté par le lecteur maître étant ensuite le seul proposé aux autres lecteurs B21, B22, B23 de la pluralité de lecteurs B1, B21, B22, B23, au cours d'une autre phase d'échange de clés entre le contrôleur A avec chacun des autres lecteurs B21, B22, B23 de la pluralité de lecteurs B1, B21, B22, B23.

Selon ces dispositions, la sécurité entre tous les lecteurs est homogénéisée.

Ce mode particulier permet également d'accélérer les échanges et réduire la quantité de données échangées entre le contrôleur A et les autres lecteurs B2x, car il n'y a plus de négociation possible, le contrôleur ne proposant qu'une seule option d'algorithme de chiffrement au cours de la phase d'échange de clés.

Selon un autre exemple de mise en œuvre, illustré sur la figure 4, la pluralité de lecteurs comprend un premier groupe B1x de lecteurs B1, B12, B1n configuré pour protéger l'accès à une première zone, et dans lequel la pluralité de lecteurs comprend au moins un deuxième groupe B2x de lecteurs B21, B22, B23 configuré pour protéger l'accès à au moins une deuxième zone, et dans lequel le lecteur maître B1 appartient au premier groupe de lecteurs , le mécanisme de sécurité étant accepté par le lecteur maître B1 au cours d'une phase d'échange de clés entre le contrôleur A et le lecteur maître B1, le mécanisme de sécurité accepté par le lecteur maître étant ensuite le seul proposé aux autres lecteurs B12, B1n du premier groupe de lecteurs B1, B12, B1n, au cours d'une autre phase d'échange de clés entre le contrôleur A avec chacun des autres lecteurs B12, B1n du premier groupe de lecteurs B1, B12, B1n.

Ainsi, l'homogénéisation peut être appliquée localement, i.e. limitée aux lecteurs d'une zone particulière de contrôle d'accès correspondant à un groupe de lecteurs spécifiques B1x si le lecteur maître appartient à cette zone, comme une zone de sécurité avec un niveau de protection élevé.

Selon un aspect de l'invention, l'invention concerne également un lecteur B de contrôle d'accès pour le contrôle d'accès à une zone ou un concentrateur IOT, configuré pour communiquer au moins une information, lue sur un badge, à un contrôleur A, selon l'un des exemples de mise en œuvre du procédé 100 décrit ci-avant.

Selon un autre aspect de l'invention, l'invention concerne également un contrôleur A d'un lecteur de contrôle d'accès configuré pour communiquer avec le lecteur de contrôle d'accès selon l'un des exemples de mise en œuvre du procédé 200 décrit ci-avant.

## Revendications

1. Procédé (100) d'échanges sécurisés entre un lecteur (B) et un contrôleur (A) configurés pour communiquer entre eux via un canal de communication (N), le procédé comprenant les phases suivantes mises en œuvre par le lecteur (B):
- une phase (101) de lecture d'au moins une information par le lecteur (B);
- une phase (102) d'échange d'une clé publique (B_{SpubK}) du lecteur (B) et d'une clé publique (A_{SpubK}) du contrôleur (A) ;
- une phase (103) de génération d'une suite de clés de session;
- une phase (104) de confirmation de la suite de clés basée sur l'utilisation d'une première clé de session (k₀) de la suite de clés de session,
- une phase (105) protocolaire de communication sécurisée entre le lecteur (B) et le contrôleur (A)
**caractérisé en ce que** la phase (102) d'échange de clés comprend :
- une étape (1021) de réception de la clé publique (A_{SpubK}) du contrôleur (A), et de réception d'une liste de mécanismes de sécurité (CcipherSuite) proposés par le contrôleur (A), et de réception d'un paramètre de sécurité (PA) généré par le contrôleur (A) ;
- une étape (1022) d'émission vers le contrôleur (A), de la clé publique (B_{SpubK}) du lecteur (B), et d'un numéro de série (SN) du lecteur (B), et d'un mécanisme (Ccipher) de sécurité accepté par le lecteur (B), ledit mécanisme de sécurité (Ccipher) étant choisi parmi la liste de mécanismes de sécurité (CcipherSuite), et d'un paramètre de sécurité (PB) généré par le lecteur (B).

2. Procédé (100) selon la revendication 1, dans lequel la phase d'échange de clés est réalisée au cours d'une phase de configuration du lecteur (B) avant une phase d'installation sur site du lecteur (B), via un autre canal de communication (N') entre le lecteur et le contrôleur, ledit autre canal (N') de communication étant différent du canal de communication (N) utilisé sur site.

3. Procédé (100) selon la revendication 1 ou 2, dans lequel les informations reçues, respectivement émises, au cours de la phase d'échange de clés sont encapsulées dans une trame IP.

4. Procédé (100) selon la revendication 1, dans lequel la clé publique du contrôleur est reçue dans un certificat du contrôleur, et dans lequel la clé publique du lecteur est émise dans un certificat du lecteur.

5. Procédé (100) selon l'une des revendications 1 à 4, dans lequel le numéro de série du lecteur est transformé ou chiffré.

6. Procédé (100) selon l'une des revendications 1 à 5, dans lequel la phase (103) de génération d'une suite de clés de session comprend les étapes suivantes :
- un étape (1031) de calcul d'un secret (S), partagé par le lecteur (B) et par le contrôleur (A), le secret (S) étant calculé à partir d'une clé privée (B_{SprivK}) du lecteur (B) et de la clé publique (A_{SpubK}) du contrôleur (A) ;
- une étape (1032) de calcul de la suite de clés de session à partir du secret partagé (S), et du numéro de série (SN) du lecteur (B), et du paramètre de sécurité (PB) généré par le lecteur (B), et du paramètre de sécurité (PA) généré par le contrôleur (A) ;

7. Procédé (100) selon la revendication 6, dans lequel l'étape (1032) de calcul de la suite de clés de session à partir du secret partagé peut être déclenchée par une réalisation d'une condition de déclenchement parmi les conditions de déclenchement suivante :
- un temps d'inactivité du contrôleur (A) supérieur à un seuil prédéterminé ;
- un nombre d'évènements supérieur à un seuil prédéterminé, le nombre d'évènement étant compté par un compteur commun au lecteur et au contrôleur ;
- une commande du contrôleur (A).

8. Procédé (100) selon l'une des revendications 1 à 7, dans lequel la phase (104) de confirmation de la suite de clés comprend :
- une étape (1041) de réception d'un premier code d'authentification (MAC1) calculé par le contrôleur (A) en fonction de la première clé de session (k₀) de la suite de clés de session, et en fonction d'un identifiant (IDA) du contrôleur (A), et d'un identifiant (IDB) du lecteur (B), et du paramètre de sécurité (PB) généré par le lecteur (B), et du paramètre de sécurité (PA) généré par le contrôleur (A);
- une étape (1042) d'émission d'un deuxième code d'authentification (MAC2) calculé par le lecteur (B) en fonction de la première clé de session (k₀) de la suite de clés de session, et en fonction de l'identifiant (IDA) du contrôleur (A), et de l'identifiant (IDB) du lecteur (B), et du paramètre de sécurité (PB) généré par le lecteur (B), et du paramètre de sécurité (PA) généré par le contrôleur (A);
- une étape (1043) de vérification du premier code d'authentification (MAC1) reçu ;

9. Procédé (100) selon l'une quelconque des revendications 1 à 8, dans lequel la phase (105) protocolaire comprend une étape (1050) de réception par le lecteur (B) d'une requête sécurisée (RS) en provenance du contrôleur (A), une étape de calcul d'une signature (1051) à partir de l'au moins une information lue et d'une clé de la suite de clé de sessions et une étape (1052) de création d'une trame comprenant la signature concaténée avec les informations lues et avec un compteur anti-rejeu, et une étape (1053) de chiffrement de la trame en utilisant une autre clé de la suite de clés de session, et une étape (1054) de transmission de la trame chiffrée (TC).

10. Procédé (200) de communication sécurisée entre un lecteur (B) et un contrôleur (A) configurés pour communiquer entre eux, le procédé (200) comprenant les phases suivantes mises en œuvre par le contrôleur (A) :
- une phase (202) d'échange d'une clé publique (BSpubK) du lecteur (B) et d'une clé publique (ASpubK) du contrôleur (A) ;
- une phase (203) de génération d'une suite de clés de session ;
- une phase (204) de confirmation de la suite de clés basée sur l'utilisation d'une première clé de session (k0) de la suite de clés de session.
- une phase (205) protocolaire de communication sécurisée entre le lecteur (B) et le contrôleur (A)
**caractérisé en ce que** la phase (202) d'échange d'une clé publique (BSpubK) du lecteur (B) et d'une clé publique (ASpubK) du contrôleur (A), comprend :
- une étape (2021) d'émission vers le lecteur (B), de la clé publique (A_{SpubK}) du contrôleur (A), et d'une liste de mécanismes de sécurité (CcipherSuite) proposés par le contrôleur (A), et d'un paramètre de sécurité (PA) généré par le contrôleur (A) ;
- une étape (2022) de réception de la clé publique (B_{SpubK}) du lecteur (B), et d'un numéro de série (SN) du lecteur (B), et d'un mécanisme (Ccipher) de sécurité accepté par le lecteur (B), ledit mécanisme de sécurité (Ccipher) étant choisi parmi la liste (CcipherSuite), et d'un paramètre de sécurité (PB) généré par le lecteur (B).

11. Procédé (200) selon la revendication 10, dans lequel la phase (203) de génération d'une suite de clés de session comprend les étapes suivantes :
- un étape (2031) de calcul d'un secret (S), partagé par le lecteur (B) et par le contrôleur (A), le secret (S) étant calculé à partir d'une clé privée (A_{SprivK}) du contrôleur (A) et de la clé publique (B_{SpubK}) du lecteur (B);
- une étape (2032) de calcul de la suite de clés de session à partir du secret partagé (S), et du numéro de série (SN) du lecteur (B), et du paramètre de sécurité (PB) généré par le lecteur (B), et du paramètre de sécurité (PA) généré par le contrôleur (A) ;

12. Procédé (200) selon la revendication 11, dans lequel l'étape (2032) de calcul de la suite de clés de session à partir du secret partagé peut être déclenchée par une réalisation d'une condition de déclenchement parmi les conditions de déclenchement suivante :
- un temps d'inactivité du contrôleur (A) supérieur à un seuil prédéterminé ;
- un nombre d'évènements supérieur à un seuil prédéterminé, le nombre d'évènement étant compté par un compteur commun au lecteur et au contrôleur ;
- une commande du contrôleur (A).

13. Procédé (200) selon l'une des revendications 10 à 12, dans lequel la phase (204) de confirmation de la suite de clés comprend :
- une étape (2041) d'émission d'un premier code d'authentification (MAC1) calculé par le contrôleur (A) en fonction de la première clé de session (k₀) de la suite de clés de session, et en fonction d'un identifiant (IDA) du contrôleur (A), et d'un identifiant (IDB) du lecteur (B), et du paramètre de sécurité (PB) généré par le lecteur (B), et du paramètre de sécurité (PA) généré par le contrôleur (A);
- une étape (2042) de réception d'un deuxième code d'authentification (MAC2) calculé par le lecteur (B) en fonction de la première clé de session (k₀) de la suite de clés de session, et en fonction d'un identifiant (IDA) du contrôleur (A), et d'un identifiant (IDB) du lecteur (B), et du paramètre de sécurité (PB) généré par le lecteur (B), et du paramètre de sécurité (PA) généré par le contrôleur (A);
- une étape (2043) de vérification du deuxième code d'authentification (MAC2) reçu.

14. Procédé (200) selon l'une des revendications 9 à 13, dans lequel le contrôleur (A) est configuré pour communiquer avec une pluralité de lecteurs (B1, B21, B22, B23), un lecteur (B1) parmi la pluralité de lecteurs étant un lecteur maître (B1), le mécanisme de sécurité étant accepté par le lecteur maître (B1) au cours d'une phase d'échange de clés entre le contrôleur (A) et le lecteur maître (B1), le mécanisme de sécurité accepté par le lecteur maître étant ensuite le seul proposé aux autres lecteurs (B21, B22, B23) de la pluralité de lecteurs (B1, B21, B22, B23), au cours d'une autre phase d'échange de clés entre le contrôleur (A) avec chacun des autres lecteurs (B21, B22, B23) de la pluralité de lecteurs (B1, B21, B22, B23).

15. Procédé (200) selon la revendication 14, dans lequel la pluralité de lecteurs comprend un premier groupe (B1x) de lecteurs (B1, B12, B1n) configuré pour protéger l'accès à une première zone, et dans lequel la pluralité de lecteurs comprend au moins un deuxième groupe (B2x) de lecteurs (B21, B22, B23) configuré pour protéger l'accès à au moins une deuxième zone, et dans lequel le lecteur maître (B1) appartient au premier groupe de lecteurs, le mécanisme de sécurité étant accepté par le lecteur maître (B1) au cours d'une phase d'échange de clés entre le contrôleur (A) et le lecteur maître (B1), le mécanisme de sécurité accepté par le lecteur maître étant ensuite le seul proposé aux autres lecteurs (B12, B1n) du premier groupe de lecteurs (B1, B12, B1n), au cours d'une autre phase d'échange de clés entre le contrôleur (A) avec chacun des autres lecteurs (B12, B1n) du premier groupe de lecteurs (B1, B12, B1n).

16. Lecteur (B) de contrôle d'accès pour le contrôle d'accès à une zone ou concentrateur IOT, configuré pour communiquer au moins une information, lue sur un badge, à un contrôleur (A), selon un procédé (100) selon l'une des revendications 1 à 9

17. Contrôleur (A) d'un lecteur de contrôle d'accès ou d'un concentrateur IOT configuré pour communiquer avec le lecteur de contrôle d'accès ou un concentrateur IOT selon un procédé (200) selon l'une des revendications 10 à 15.

## Patentansprüche

1. Verfahren (100) für den sicheren Austausch zwischen einem Leser (B) und einer Steuereinheit (A), die konfiguriert sind, um über einen Kommunikationskanal (N) miteinander zu kommunizieren, wobei das Verfahren die folgenden vom Leser (B) umgesetzten Phasen umfasst:
- eine Phase (101) zum Lesen mindestens einer Information durch den Leser (B);
- eine Phase (102) zum Austauschen eines öffentlichen Schlüssels (B _{Spubk} ) des Lesers (B) und eines öffentlichen Schlüssels (A _{Spubk} ) der Steuereinheit (A);
- eine Phase (103) zum Generieren einer Reihe von Sitzungsschlüsseln;
- eine Phase (104) zum Bestätigen der Reihe von Schlüsseln auf der Grundlage der Verwendung eines ersten Sitzungsschlüssels (k₀ ) der Reihe von Sitzungsschlüsseln,
- eine Protokollphase (105) zur gesicherten Kommunikation zwischen dem Leser (B) und der Steuereinheit (A)
**dadurch gekennzeichnet, dass**
die Phase (102) zum Austauschen von Schlüsseln umfasst:
- einen Schritt (1021) zum Empfangen des öffentlichen Schlüssels (A _{Spubk}) von der Steuereinheit (A) und zum Empfangen einer Liste von Sicherheitsmechanismen (CcipherSuite), die von der Steuereinheit (A) vorgeschlagen werden, und zum Empfangen eines von der Steuereinheit (A) generierten Sicherheitsparameters (PA);
- einen Schritt (1022) zum Senden zur Steuereinheit (A), des öffentlichen Schlüssels (B _{Spubk} ) des Lesers (B) und einer Seriennummer (SN) des Lesers (B) und eines vom Leser (B) akzeptierten Sicherheitsmechanismus (Ccipher), wobei der Sicherheitsmechanismus (Ccipher) aus der Liste der Sicherheitsmechanismen (CcipherSuite) ausgewählt ist, und eines vom Leser (B) generierten Sicherheitsparameters (PB).

2. Verfahren (100) nach Anspruch 1, wobei die Phase zum Austauschen von Schlüsseln im Laufe einer Konfigurationsphase des Lesers (B) vor einer Installationsphase vor Ort des Lesers (B) über einen anderen Kommunikationskanal (N') zwischen dem Leser und der Steuereinheit durchgeführt wird, wobei sich der andere Kommunikationskanal (N') von dem vor Ort verwendeten Kommunikationskanal (N) unterscheidet.

3. Verfahren (100) nach Anspruch 1 oder 2, wobei die im Laufe der Phase zum Austauschen von Schlüsseln empfangenen bzw. gesendeten Informationen in einem IP-Frame eingekapselt sind.

4. Verfahren (100) nach Anspruch 1, wobei der öffentliche Schlüssel der Steuereinheit in einem Zertifikat der Steuereinheit empfangen wird und der öffentliche Schlüssel des Lesers in einem Zertifikat des Lesers gesendet wird.

5. Verfahren (100) nach einem der Ansprüche 1 bis 4, wobei die Seriennummer des Lesers umgewandelt oder verschlüsselt wird.

6. Verfahren (100) nach einem der Ansprüche 1 bis 5, wobei die Phase (103) zum Generierens einer Reihe von Sitzungsschlüsseln die folgenden Schritte umfasst:
- einen Schritt (1031) zum Berechnen eines Geheimnisses (S), das vom Leser (B) und von der Steuereinheit (A) geteilt wird, wobei das Geheimnis (S) aus einem privaten Schlüssel (B _{Sprivk}) des Lesers (B) und dem öffentlichen Schlüssel (A _{Spubk}) der Steuereinheit (A) berechnet wird;
- einen Schritt (1032) zum Berechnen der Reihe von Sitzungsschlüsseln aus dem geteilten Geheimnis (S) und der Seriennummer (SN) des Lesers (B) und des vom Leser (B) generierten Sicherheitsparameters (PB) und des von der Steuereinheit (A) generierten Sicherheitsparameters (PA);

7. Verfahren (100) nach Anspruch 6, wobei der Schritt (1032) zum Berechnen der Reihe von Sitzungsschlüsseln aus dem geteilten Geheimnis durch ein Durchführen einer Auslösebedingung aus den folgenden Auslösebedingungen ausgelöst werden kann:
- eine Inaktivitätszeit der Steuereinheit (A) über einem vorbestimmten Schwellenwert;
- eine Anzahl an Ereignissen über einem vorbestimmten Schwellenwert, wobei die Anzahl an Ereignissen von einem gemeinsamen Zähler des Lesers und der Steuereinheit gezählt wird;
- einen Befehl der Steuereinheit (A).

8. Verfahren (100) nach einem der Ansprüche 1 bis 7, wobei die Phase (104) zum Bestätigen der Reihe von Schlüsseln umfasst:
- einen Schritt (1041) zum Empfangen eines ersten Authentifizierungscodes (MAC1), der von der Steuereinheit (A) in Abhängigkeit vom ersten Sitzungsschlüssel (k₀) der Reihe von Sitzungsschlüsseln und in Abhängigkeit von einer Kennung (IDA) der Steuereinheit (A) und einer Kennung (IDB) des Lesers (B) und des vom Leser (B) generierten Sicherheitsparameters (PB) und des von der Steuereinheit (A) generierten Sicherheitsparameters (PA) berechnet wird;
- einen Schritt (1042) zum Senden eines zweiten Authentifizierungscodes (MAC2), der vom Leser (B) in Abhängigkeit vom ersten Sitzungsschlüssel (k₀) der Reihe von Sitzungsschlüsseln und in Abhängigkeit von der Kennung (IDA) der Steuereinheit (A) und der Kennung (IDB) des Lesers (B) und des vom Leser (B) generierten Sicherheitsparameters (PB) und des von der Steuereinheit (A) generierten Sicherheitsparameters (PA) berechnet wird;
- einen Schritt (1043) zum Überprüfen des ersten empfangenen Authentifizierungscodes (MAC1);

9. Verfahren (100) nach einem der Ansprüche 1 bis 8, wobei die Protokollphase (105) einen Schritt (1050) zum Empfangen durch den Leser (B) einer gesicherte Anfrage (RS) von der Steuereinheit (A), einen Schritt zum Berechnen einer Signatur (1051) aus der mindestens einen gelesenen Information und einem Schlüssel der Reihe von Sitzungsschlüsseln, und einen Schritt (1052) zum Erstellen eines Frames, der die Signatur umfasst, die mit den gelesenen Informationen und mit einem Wiedergabeschutzzähler verkettet ist, und einen Schritt (1053) zum Verschlüsseln des Frames unter Verwendung eines anderen Schlüssels der Reihe von Sitzungsschlüsseln und einen Schritt (1054) zum Übertragen des verschlüsselten Frames (TC) umfasst.

10. Verfahren (200) zur gesicherten Kommunikation zwischen einem Leser (B) und einer Steuereinheit (A), die konfiguriert sind, um miteinander zu kommunizieren, wobei das Verfahren (200) die folgenden Phasen umfasst, die von der Steuereinheit (A) umgesetzt werden:
- eine Phase (202) zum Austauschen eines öffentlichen Schlüssels (BSpubK) des Lesers (B) und eines öffentlichen Schlüssels (ASpubk) der Steuereinheit (A);
- eine Phase (203) zum Generieren einer Reihe von Sitzungsschlüsseln;
- eine Phase (204) zum Bestätigen der Reihe von Schlüsseln auf der Grundlage der Verwendung eines ersten Sitzungsschlüssels (k0) der Reihe von Sitzungsschlüsseln.
- eine Protokollphase (205) zur gesicherten Kommunikation zwischen dem Leser (B) und der Steuereinheit (A)
**dadurch gekennzeichnet, dass**
die Phase (202) zum Austauschen eines öffentlichen Schlüssels (BSpubK) des Lesers (B) und eines öffentlichen Schlüssels (ASpubK) der Steuereinheit (A), umfasst:
- einen Schritt (2021) zum Senden zum Leser (B), des öffentlichen Schlüssels (A _{Spubk}) der Steuereinheit (A) und einer Liste von Sicherheitsmechanismen (CcipherSuite), die von der Steuereinheit (A) vorgeschlagen werden, und eines von der Steuereinheit (A) generierten Sicherheitsparameters (PA);
- einen Schritt (2022) zum Empfangen des öffentlichen Schlüssels (B _{Spubk} ) des Lesers (B) und einer Seriennummer (SN) des Lesers (B) und eines vom Leser (B) akzeptierten Sicherheitsmechanismus (Ccipher), wobei der Sicherheitsmechanismus (Ccipher) aus der Liste (CcipherSuite) ausgewählt ist, und eines vom Leser (B) generierten Sicherheitsparameters (PB).

11. Verfahren (200) nach Anspruch 10, wobei die Phase (203) zum Generieren einer Reihe von Sitzungsschlüsseln die folgenden Schritte umfasst:
- einen Schritt (2031) zum Berechnen eines Geheimnisses (S), das vom Leser (B) und von der Steuereinheit (A) geteilt wird, wobei das Geheimnis (S) aus einem privaten Schlüssel (A _{Sprivk}) der Steuereinheit (A) und dem öffentlichen Schlüssel (B _{Spubk}) des Lesers (B) berechnet wird;
- einen Schritt (2032) zum Berechnen der Reihe von Sitzungsschlüsseln aus dem geteilten Geheimnis (S) und der Seriennummer (SN) des Lesers (B) und des vom Leser (B) generierten Sicherheitsparameters (PB) und des von der Steuereinheit (A) generierten Sicherheitsparameters (PA);

12. Verfahren (200) nach Anspruch 11, wobei der Schritt (2032) zum Berechnen der Reihe von Sitzungsschlüsseln aus dem geteilten Geheimnis durch ein Durchführen einer der folgenden Auslösebedingungen ausgelöst werden kann:
- eine Inaktivitätszeit der Steuereinheit (A) über einem vorbestimmten Schwellenwert;
- eine Anzahl an Ereignissen über einem vorbestimmten Schwellenwert, wobei die Anzahl an Ereignissen von einem gemeinsamen Zähler des Lesers und der Steuereinheit gezählt wird;
- einen Befehl der Steuereinheit (A).

13. Verfahren (200) nach einem der Ansprüche 10 bis 12, wobei die Phase (204) zum Bestätigen der Reihe von Schlüsseln umfasst:
- einen Schritt (2041) zum Senden eines ersten Authentifizierungscodes (MAC1), der von der Steuereinheit (A) in Abhängigkeit vom ersten Sitzungsschlüssel (k₀) der Reihe von Sitzungsschlüsseln und in Abhängigkeit von einer Kennung (IDA) der Steuereinheit (A) und einer Kennung (IDB) des Lesers (B) und des vom Leser (B) generierten Sicherheitsparameters (PB) und des von der Steuereinheit (A) generierten Sicherheitsparameters (PA) berechnet wird;
- einen Schritt (2042) zum Empfangen eines zweiten Authentifizierungscodes (MAC2), der vom Leser (B) in Abhängigkeit vom ersten Sitzungsschlüssel (k₀) der Reihe von Sitzungsschlüsseln und in Abhängigkeit von einer Kennung (IDA) der Steuereinheit (A) und einer Kennung (IDB) des Lesers (B) und des vom Leser (B) generierten Sicherheitsparameters (PB) und des von der Steuereinheit (A) generierten Sicherheitsparameters (PA) berechnet wird;
- einen Schritt (2043) zum Überprüfen des zweiten empfangenen Authentifizierungscodes (MAC2).

14. Verfahren (200) nach einem der Ansprüche 9 bis 13, wobei die Steuereinheit (A) konfiguriert ist, um mit einer Vielzahl von Lesern (B1, B21, B22, B23) zu kommunizieren, wobei ein Leser (B1) unter der Vielzahl von Lesern ein Masterleser (B1) ist, wobei der Sicherheitsmechanismus vom Masterleser (B1) im Laufe einer Phase zum Austauschen von Schlüsseln zwischen der Steuereinheit (A) und dem Masterleser (B1) akzeptiert wird, wobei der Sicherheitsmechanismus, der vom Masterleser akzeptiert wird, danach der einzige ist, der den anderen Lesern (B21, B22, B23) der Vielzahl von Lesern (B1, B21, B22, B23), im Laufe einer weiteren Phase zum Austauschen von Schlüsseln zwischen der Steuereinheit (A) mit jedem der anderen Leser (B21, B22, B23) der Vielzahl von Lesern (B1), B21, B22, B23) vorgeschlagen wird.

15. Verfahren (200) nach Anspruch 14, wobei die Vielzahl von Lesern eine erste Gruppe (B1x) von Lesern (B1, B12, B1n) umfasst, die konfiguriert sind, um den Zugang zu einem ersten Bereich zu schützen, und wobei die Vielzahl von Lesern mindestens eine zweite Gruppe (B2x) von Lesern (B21, B22, B23) umfasst, die konfiguriert sind, um den Zugang zu mindestens einem zweiten Bereich zu schützen, und wobei der Masterleser (B1) der ersten Lesergruppe angehört, der Sicherheitsmechanismus vom Masterleser (B1) im Laufe einer Phase zum Austauschen von Schlüsseln zwischen der Steuereinheit (A) und dem Masterleser (B1) akzeptiert wird, wobei der vom Masterleser akzeptierte Sicherheitsmechanismus danach der einzige ist, der den anderen Lesern (B12, B1n) der ersten Lesergruppe (B1, B12, B1n) in einer weiteren Pase zum Austauschen von Schlüsseln zwischen der Steuereinheit (A) mit jedem der anderen Leser (B12, B1n) der ersten Lesergruppe (B1, B12, B1n) vorgeschlagen wird.

16. Leser (B) zur Zugangssteuerung zum Steuern des Zugangs zu einem IOT-Bereich oder -Konzentrator, der konfiguriert ist, um mindestens eine auf einem Ausweis ausgelesene Information gemäß einem Verfahren (100) nach einem der Ansprüche 1 bis 9 an eine Steuereinheit (A) zu kommunizieren

17. Steuereinheit (A) eines Lesers zur Zugangssteuerung oder eines IOT-Konzentrators, die konfiguriert ist, um mit dem Leser zur Zugangssteuerung oder einem IOT-Konzentrator gemäß einem Verfahren (200) nach einem der Ansprüche 10 bis 15 zu kommunizieren.

## Claims

1. A method (100) for secure exchanges between a reader (B) and a controller (A) configured to communicate with each other via a communication channel (N), the method comprising the following phases implemented by the reader (B):
- a phase (101) of reading at least one information by the reader (B);
- a phase (102) of exchanging a public key (B_{SpubK}) of the reader (B) and a public key (A_{SpubK}) of the controller (A);
- a phase (103) of generating a sequence of session keys;
- a phase (104) of confirming the sequence of keys based on the use of a first session key (k₀) of the sequence of session keys,
- a protocol phase (105) for secure communication between the reader (B) and the controller (A)
**characterized in that**
the key exchange phase (102) comprises:
- a step (1021) of receiving the public key (A_{SpubK}) of the controller (A), and receiving a list of security mechanisms (CcipherSuite) proposed by the controller (A), and receiving a security parameter (PA) generated by the controller (A);
- a step (1022) of transmitting to the controller (A), the public key (B_{SpubK}) of the reader (B), and a serial number (SN) of the reader (B), and a security mechanism (Ccipher) accepted by the reader (B), said security mechanism (Ccipher) being selected from the list of security mechanisms (CcipherSuite), and a security parameter (PB) generated by the reader (B).

2. The method (100) according to claim 1, wherein the key exchange phase is carried out during a configuration phase of the reader (B) before an on-site installation phase of the reader (B), via another communication channel (N') between the reader and the controller, said other communication channel (N') being different from the communication channel (N) used on site.

3. The method (100) according to claim 1 or 2, wherein the information received, respectively transmitted, during the key exchange phase is encapsulated in an IP frame.

4. The method (100) according to claim 1, wherein the public key of the controller is received in a certificate of the controller, and wherein the public key of the reader is transmitted in a certificate of the reader.

5. The method (100) according to any of claims 1 to 4, wherein the serial number of the reader is transformed or encrypted.

6. The method (100) according to any of claims 1 to 5, wherein the phase (103) of generating a sequence of session keys comprises the following steps:
- a step (1031) of calculating a secret (S), shared by the reader (B) and the controller (A), the secret (S) being calculated from a private key (B_{SprivK}) of the reader (B) and the public key (A_{SpubK}) of the controller (A);
- a step (1032) of calculating the sequence of session keys from the shared secret (S), and the serial number (SN) of the reader (B), and the security parameter (PB) generated by the reader (B), and the security parameter (PA) generated by the controller (A);

7. The method (100) according to claim 6, wherein the step (1032) of calculating the sequence of session keys from the shared secret may be triggered by the occurrence of a triggering condition among the following triggering conditions:
- an idle time of the controller (A) exceeding a predetermined threshold;
- a number of events exceeding a predetermined threshold, the number of events being counted by a counter common to the reader and the controller;
- a command from the controller (A).

8. The method (100) according to any of claims 1 to 7, wherein the phase (104) of confirming the sequence of keys comprises:
- a step (1041) of receiving a first authentication code (MAC1) calculated by the controller (A) according to the first session key (k₀) of the sequence of session keys, and according to an identifier (IDA) of the controller (A), and an identifier (IDB) of the reader (B), and the security parameter (PB) generated by the reader (B), and the security parameter (PA) generated by the controller (A);
- a step (1042) of transmitting a second authentication code (MAC2) calculated by the reader (B) according to the first session key (k₀) of the sequence of session keys, and according to the identifier (IDA) of the controller (A), and the identifier (IDB) of the reader (B), and the security parameter (PB) generated by the reader (B), and the security parameter (PA) generated by the controller (A);
- a step (1043) of verifying the received first authentication code (MAC1);

9. The method (100) according to any one of claims 1 to 8, wherein the protocol phase (105) comprises a step (1050) of receiving by the reader (B) a secure request (RS) from the controller (A), a step of calculating a signature (1051) from the at least one read information and a key of the sequence of session keys and a step (1052) of creating a frame comprising the signature concatenated with the read information and with an anti-replay counter, and a step (1053) of encrypting the frame using another key of the sequence of session keys, and a step (1054) of transmitting the encrypted frame (TC).

10. A method (200) for secure communication between a reader (B) and a controller (A) configured to communicate with each other, the method (200) comprising the following phases implemented by the controller (A):
- a phase (202) of exchanging a public key (B_{SpubK}) of the reader (B) and a public key (A_{SpubK}) of the controller (A);
- a phase (203) of generating a sequence of session keys;
- a phase (204) of confirming the sequence of keys based on the use of a first session key (k₀) of the sequence of session keys.
- a protocol phase (205) for secure communication between the reader (B) and the controller (A)
**characterized in that**
the phase (202) of exchanging a public key (B_{SpubK}) of the reader (B) and a public key (A_{SpubK}) of the controller (A), comprises:
- a step (2021) of transmitting to the reader (B), the public key (A_{SpubK}) of the controller (A), and a list of security mechanisms (CcipherSuite) proposed by the controller (A), and a security parameter (PA) generated by the controller (A);
- a step (2022) of receiving the public key (B_{SpubK}) of the reader (B), and a serial number (SN) of the reader (B), and a security mechanism (Ccipher) accepted by the reader (B), said security mechanism (Ccipher) being selected from the list (CcipherSuite), and a security parameter (PB) generated by the reader (B).

11. The method (200) according to claim 10, wherein the phase (203) of generating a sequence of session keys comprises the following steps:
- a step (2031) of calculating a secret (S), shared by the reader (B) and the controller (A), the secret (S) being calculated from a private key (A_{SprivK}) of the controller (A) and from the public key (B_{SpubK}) of the reader (B);
- a step (2032) of calculating the sequence of session keys from the shared secret (S), and the serial number (SN) of the reader (B), and the security parameter (PB) generated by the reader (B), and the security parameter (PA) generated by the controller (A);

12. The method (200) according to claim 11, wherein the step (2032) of calculating the sequence of session keys from the shared secret may be triggered by the occurrence of a triggering condition among the following triggering conditions:
- an idle time of the controller (A) exceeding a predetermined threshold;
- a number of events exceeding a predetermined threshold, the number of events being counted by a counter common to the reader and the controller;
- a command from the controller (A).

13. The method (200) according to any of claims 10 to 12, wherein the phase (204) of confirming the sequence of keys comprises:
- a step (2041) of transmitting a first authentication code (MAC1) calculated by the controller (A) according to the first session key (k₀) of the sequence of session keys, and according to an identifier (IDA) of the controller (A), and an identifier (IDB) of the reader (B), and the security parameter (PB) generated by the reader (B), and the security parameter (PA) generated by the controller (A);
- a step (2042) of receiving a second authentication code (MAC2) calculated by the reader (B) according to the first session key (k₀) of the sequence of session keys, and according to an identifier (IDA) of the controller (A), and an identifier (IDB) of the reader (B), and the security parameter (PB) generated by the reader (B), and the security parameter (PA) generated by the controller (A);
- a step (2043) of verifying the received second authentication code (MAC2).

14. The method (200) according to any of claims 9 to 13, wherein the controller (A) is configured to communicate with a plurality of readers (B1, B21, B22, B23), one reader (B1) among the plurality of readers being a master reader (B1), the security mechanism being accepted by the master reader (B1) during a key exchange phase between the controller (A) and the master reader (B1), the security mechanism accepted by the master reader then being the only one proposed to the other readers (B21, B22, B23) of the plurality of readers (B1, B21, B22, B23), during another key exchange phase between the controller (A) and each of the other readers (B21, B22, B23) of the plurality of readers (B1, B21, B22, B23).

15. The method (200) according to claim 14, wherein the plurality of readers comprises a first group (B1x) of readers (B1, B12, B1n) configured to protect access to a first area, and wherein the plurality of readers comprises at least one second group (B2x) of readers (B21, B22, B23) configured to protect access to at least one second area, and wherein the master reader (B1) belongs to the first group of readers, the security mechanism being accepted by the master reader (B1) during a key exchange phase between the controller (A) and the master reader (B1), the security mechanism accepted by the master reader then being the only one proposed to the other readers (B12, B1n) of the first group of readers (B1, B12, B1n), during another key exchange phase between the controller (A) and each of the other readers (B12, B1n) of the first group of readers (B1, B12, B1n).

16. An access control reader (B) for controlling access to an area or IOT hub, configured to communicate at least one information, read from a badge, to a controller (A), according to a method (100) according to any of claims 1 to 9.

17. A controller (A) of an access control reader or an IOT hub configured to communicate with the access control reader or an IOT hub according to a method (200) according to any of claims 10 to 15.
